# EUROPÄISCHE PATENTSCHRIFT

(11) **EP 0 854 953 B1**
(45) Veröffentlichungstag und Bekanntmachung des Hinweises auf die Patenterteilung: **09.02.2000**
(21) Anmeldenummer: 96942247.6
(22) Anmeldetag: 26.09.1996
(51) Int. Cl.: D21C 3/22, G05B 13/02

(54) **VERFAHREN ZUR BESTIMMUNG DES ENDPUNKTES DER ZELLSTOFFKOCHUNG UND ANORDNUNG ZUM STEUERN DER KOCHZEIT BEI DER ZELLSTOFFKOCHUNG IN EINEM REAKTOR**
PROCESS FOR DETERMINING THE FINAL POINT OF PULP COOKING AND AN ARRANGEMENT FOR CONTROLLING THE PULP COOKING TIME IN A REACTOR
PROCEDE POUR DETERMINER LA FIN DE CUISSON DE LA CELLULOSE ET DISPOSITIF POUR COMMANDER LE TEMPS DE CUISSON LORS DE LA CUISSON DANS UN REACTEUR

(30) Priorität: 09.10.1995 DE 19537539
(43) Veröffentlichungstag der Anmeldung: 29.07.1998
(73) Patentinhaber: SIEMENS AKTIENGESELLSCHAFT, 80333 München (DE)
(72) Erfinder: OBRADOVIC, Dragan, D-81669 München (DE); FURUMOTO, Herbert, D-91052 Erlangen (DE); FISCHER, Klaus, D-01737 Grillenburg (DE)
(86) Internationale Anmeldenummer: DE9601841
(87) Internationale Veröffentlichungsnummer: WO9713916

(56) Entgegenhaltungen:
- EP-A- 0 110 683
- EP-A- 0 445 321
- EP-A- 0 492 364
- EP-A- 0 590 433
- DE-A- 3 641 785
- GB-A- 747 108
- US-A- 3 886 034
- US-A- 3 941 649
- US-A- 4 086 129
- PROCEEDINGS OF THE INTERNATIONAL CONFERENCE ON NEURAL NETWORKS AND THEIR INDUSTRIAL AND COGNITIVE APPLICATIONS, 1.Januar 1993, Seiten 25-32, XP000562918 DRAGAN OBRADOVIC ET AL: "NEURAL NETWORK FOR INDUSTRIAL PROCESS CONTROL: APPLICATIONS IN PULP PRODUCTION" in der Anmeldung erwähnt

## Beschreibung

Die Erfindung bezieht sich auf ein Verfahren zur Bestimmung des Endpunktes der Zellstoffkochung, bei welchem Zeitpunkt die chemische und/oder physikalische Größen für die Kochung charakteristisch sind, wobei wenigstens ein Neuronales Netz verwendet wird, dem bei der Kochung anfallende Meßgrößen eingegeben werden und das als Ausgröße wenigstens die für die Kochung charakteristische Größe ausgibt. Daneben bezieht sich die Erfindung auch auf die zugehörige Anordnung zum Steuern der Kochzeit bei der Zellstoffkochung in einem Reaktor, mit einem dem Prozeß angepaßten Steuermodell, das wenigstens ein Neuronalen Netz enthält.

Bei der Zellstoffkochung sind Prozeßvariable, welche die Qualität des Kochprozesses beschreiben, im wesentlichen die Viskosität und die Kappazahl des produzierten Zellstoffes, wobei für die Praxis weiterhin dessen Ausbeute maßgeblich ist. Bei festgelegten Temperatur- und Druckbedingungen und bekannten chemischen Anfangskonzentrationen hängt die erreichte Zellstoffqualität von der Reaktion, d.h. der Kochzeit, ab. In der Praxis soll die Kochzeit möglichst genau vorherbestimmt werden, wobei allerdings die Viskosität und die Kappazahl während des Kochprozesses nicht gemessen werden können. Aus diesen Gründen konnten bisher die Werte obiger Prozeßvariablen nur geschätzt werden.

Aus der EP-A-0 590 433 ist ein Steuerverfahren für die Herstellung von Zellstoff durch Druck- und Temperatursteuerung bekannt, bei der ein Neuronales Netz und ein Fuzzy-Regler parallel verwendet werden. Üblicherweise wird das Neuronale Netz einmal mittels des Reglers adaptiert. Alternativ dazu soll die Adaption auch ständig in Betrieb sein und Reißfestigkeit bzw. Ausbeute angepaßt werden. Da diese Werte im Labor bestimmt werden, bedeutet dies eine Anpassung nach einer durchgeführten Zellstoffkochung.

Mit der Veröffentlichung der Erfinder in ,,Proceedings of the 6th Int. Conf. on Neural Networks and their Industrial and Cognitive Applications", Sept. 1993, Nimes (FR), Seiten 25 bis 32, wurde bereits die Verwendung von Neuronalen Netzen für obiges Problem vorgeschlagen. Dabei wird als Steuergröße die sogenannte Permanganatzahl bestimmt, die aus Meßgrößen abgeleitet werden kann. Vom trainierten Neuronalen Netz kann so mit einem vorgegebenen Kernalgorithmus eine Kochzeit vorhergesagt werden, die mit tatsächlichen Kochzeiten verglichen wird. Bei Abweichungen wird das Neuronale Netz nachtrainiert. Das Nachtrainieren der Neuronalen Netze erfolgt zwischen den einzelnen Kochungen ("batch") und ist aufwendig.

Aufgabe der Erfindung ist es daher, letzteres Nachtrainieren der Neuronalen Netze überflüssig zu machen. Es soll ein Verfahren angegeben und eine zugehörige Anordnung geschaffen werden, mit denen der Endpunkt der Zellstoffkochung entsprechend einem Modell festgelegt werden kann, welches während des Prozesses adaptierbar ist.

Die Aufgabe ist erfindungsgemäß dadurch gelöst, daß die Eingangsgrößen über Einheiten mit einem dynamischen Modell für die jeweilige Meßgröße in das Neuronale Netz eingegeben werden und daß als Ausgangsgröße speziell die Viskosität und/oder die Kappazahl erhalten werden, wobei das Neuronale Netz während einer laufenden Kochung angepaßt und zur Anpassung das dynamische Modell der sich ändernden Meßgrößen herangezogen wird.

Bei der zugehörigen Anordnung zum Steuern der Kochzeit bei der Zellstoffkochung in einem Reaktor unter Verwendung des dem Prozeß angepaßten Steuermodelles, das wenigstens ein Neuronales Netz enthält, ist das Steuermodell eine Kombination des Neuronalen Netzes mit dynamischen analytischen Modellen der Prozeßvariablen. Vorteilhafterweise ist dabei eine Einheit zum Online-Lernen des Neuronalen Netzes während der Kochung vorhanden.

Bei der Erfindung läßt sich das Prozeßmodell selbständig adaptieren, was deshalb von Bedeutung ist, weil die Kochvorgänge als sog. Batch-Prozesse eine zeitlich variierende Charakteristik haben.

Durch die Anpassung des Neuronalen Netzes während des Kochprozesses ergibt sich im Rahmen der Erfindung eine zweistufige Vorhersage der Viskosität und/oder der Kappazahl, wobei statische und dynamische Modelle kombiniert werden. Das statische Modell der Viskosität und/oder der Kappazahl besteht aus einem Neuronalen Netz, das aus den Messungen der Farbe, der Leitfähigkeit bzw. dem pH-Wert und des SO₂-Gehaltes zu einer bestimmten Zeit den Wert der Viskosität und/oder der Kappazahl für denselben Zeitpunkt schätzen kann. Dazu werden die Meßwerte wie SO₂-Gehalt, die Farbe und die Leitfähigkeit bzw. der pH-Wert als dynamische Variablen modelliert. Die Erzeugung solcher dynamischen Modelle wird durch die Messung der Variablen während des Kochprozesses möglich.

Die dynamischen Modelle für den SO₂-Gehalt, die Farbe und die Leitfähigkeit bzw. den pH-Wert werden verwendet, um im Voraus die Werte dieser Variablen für bestimmte Zeitpunkte im Endbereich der Kochung zu berechnen, aus denen dann mit Hilfe des Neuronalen Netzes die Bestimmung der Viskosität und/oder der Kappazahl erfolgt. Daraus ergibt sich ein Zeitpunkt tₒₚₜ, für den die Schätzung der Viskosität und/oder der Kappazahl hinreichend nah den gewünschten Werten ist.

Wesentlich ist bei der Erfindung, daß nunmehr ein Online-Lernen sowohl während als auch nach dem Kochvorgang möglich ist. Die dynamischen Modelle für den SO₂-Gehalt, die Farbe und die Leitfähigkeit bzw. den pH-Wert werden ständig erneuert, sobald neue Messungen verfügbar sind. Aus diesen Werten kann mit dem unveränderten Neuronalen Netz die Kochzeit neu berechnet werden. Das Neuronale Netz wird dagegen erst nach dem Kochvorgang, wenn aktuelle Labormessungen verfügbar sind, aktualisiert.

Weitere Einzelheiten und Vorteile der Erfindung ergeben sich aus der nachfolgenden Figurenbeschreibung von Ausführungsbeispielen anhand der Zeichnung. Es zeigen als Blockschaltbilder
- Figur 1: ein Neuronales Netzwerk für die Überwachung der Zellstoffkochung,
- Figur 2: ein Modell speziell für die Viskositätsvorhersage mit der Möglichkeit einer Online-Adaption.
- Figur 3: eine Variante zu Figur 2.

Die Figuren werden nachfolgend teilweise gemeinsam beschrieben.

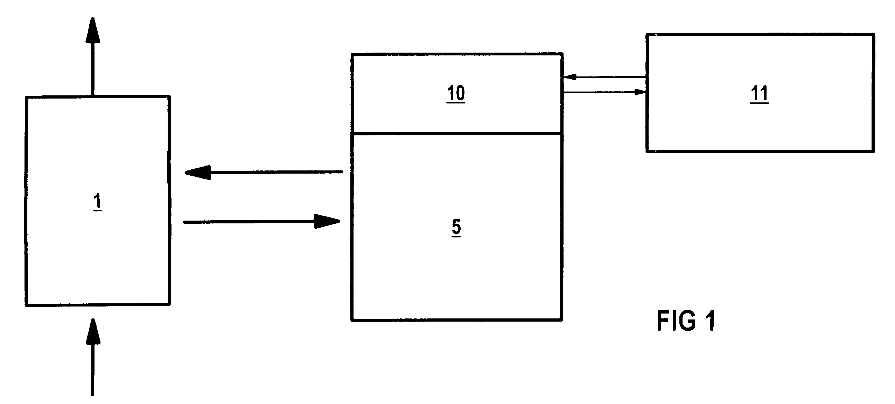

In Figur 1 ist ein Reaktor 1 zur Zellstoffkochung dargestellt, dem als Rohstoffe Holz und Kochchemikalien zugeführt werden und der als Kochprodukt Zellstoff bzw. die sogenannte Pulpe liefert. Der Reaktor 1 wird hinsichtlich Einstellung vorgegebener Druck- und/oder Temperaturverhältnisse mittels eines geeigneten Steuer- und/oder Regelsystems 5 betrieben. Dem Steuer- und/oder Regelsystem 5 liegt ein Modell 10 zugrunde, das über eine Einheit 11 an die tatsächlichen Verhältnisse anpaßbar ist. Die Einheit 11 kann durch geeignete Software realisiert sein.

Der Kochprozeß für die Zellstoffkochung ist im Prinzip ein dynamischer Prozeß, weshalb er durch ein dynamisches Modell beschrieben werden müßte. Ein dynamisches Modell einer bestimmten Variablen kann allerdings nur dann abgeleitet werden, wenn diese Variable während des Prozesses gemessen werden kann. Eine Messung speziell der Viskosität oder Bestimmung der Kappazahl ist allerdings erst am Ende des Kochprozesses möglich.

Aus letzterem Grund kann insbesondere die Viskosität nur über ein statisches Modell, das im allgemeinen nur für das Zeitintervall, in dem die letzten Kochvorgänge gültig sind, bestimmt werden, wozu die anderen Prozeßvariablen herangezogen werden. Die Vorgaben für das Viskositätsmodell können dabei aus solchen Variablen, die während des Prozesses gemessen werden, erzielt werden. Letztere sind beispielsweise die Konzentration an SO₂, die Farbe und die Leitfähigkeit bzw. der pH-Wert.

Um das angegebene Viskositätsmodell am Beispiel des Kochprozesses zur Vorhersage des Viskositätswertes zu einem späteren Zeitpunkt verwenden zu können, müssen die Werte für die SO₂-Konzentration, die Farbe und die Leitfähigkeit bzw. pH-Wert für diesen Zeitpunkt prognostiziert werden. Für diesen Zweck verwendet man dynamische Modelle dieser Variablen, welche Schätzungen für die Variablen für einen gewünschten Zeitpunkt t basierend auf bekannten Anfangswerten liefern. Dadurch ergibt sich die Vorhersage speziell der Viskosität für einen bestimmten zukünftigen Zeitpunkt als zweistufiger Prozeß.

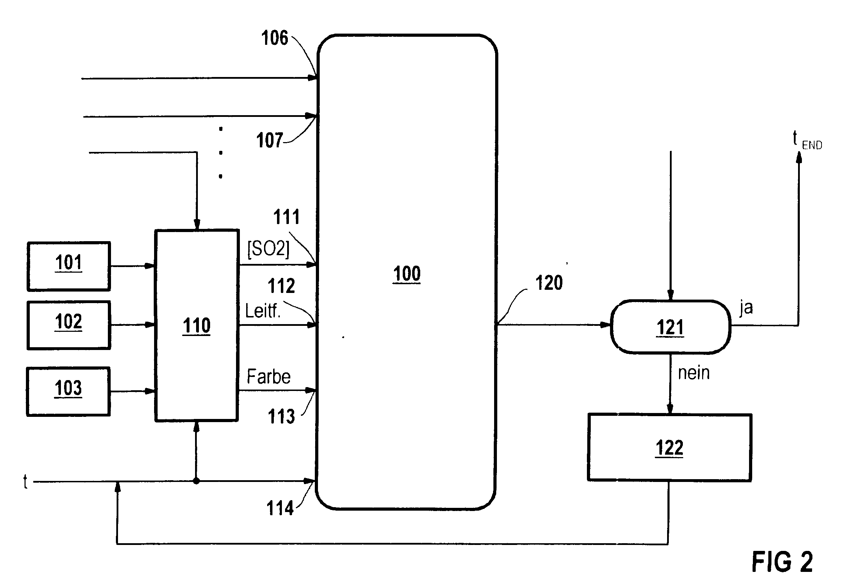

Für den zweistufigen Prozeß prognostiziert man also mit Hilfe der dynamischen Modelle der Eingangsvariablen zunächst die Werte für einen bestimmten Zeitpunkt, aus denen dann mit Hilfe des statischen Viskositätsmodelles die gewünschte Schätzung der Viskosität gewonnen wird. Dies ist in Figur 2 realisiert: Es ist ein Neuronales Netz 100 zur Bestimmung der Viskosität dargestellt, welchem dynamische Modelle 101 bis 103 für den SO₂-Gehalt, die Farbe und die Leitfähigkeit bzw. den pH-Wert, welche die Eingangsgrößen für das Neuronale Netz darstellen, vorgeschaltet sind. Zwischengeschaltet ist eine Einheit 110 zum Adaptieren dieser Meßwerte auf den gewünschten Zeitpunkt. Das Neuronale Netz 100 hat neben Eingängen 111 bis 113 für die adaptierten Werte von SO₂-Gehalt, Farbe und Leitfähigkeit bzw. pH-Wert weitere Eingänge 106 ff. für Temperatur, Druck, Zeit und andere Prozeßbedingungen. Der Ausgangswert 120 kennzeichnet die Viskosität, aus der durch Vergleich in der Einheit 121 mit bekannten Viskositätswerten die aktuell geforderte Kochzeit für die laufende Kochung bestimmbar ist. Weiterhin ist eine Zeiteinheit 122 vorhanden, die auf den Eingangswert rückkoppelbar ist.

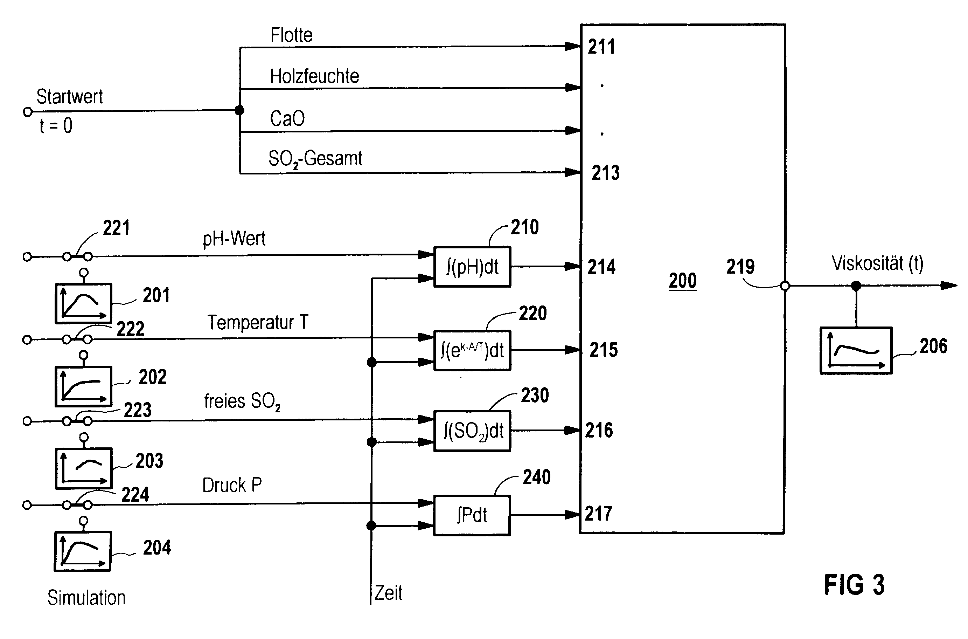

In Figur 3 werden speziell als Prozeßvariable der pH-Wert, die Temperatur T, der Gehalt an freiem SO₂ und der Druck P berücksichtigt. Das hier verwendete neuronale Netz ist mit 200 bezeichnet und hat eine Reihe von Eingängen 211 bis 217, durch die einerseits die Startwerte für t = 0 und andererseits die laufenden Prozeßvariablen zugeführt werden. Als Startwerte sind hier neben dem SO₂-Gesamtgehalt noch das Flottenverhältnis FV, die Holzfeuchte und der CO-Gehalt zu berücksichtigen.

Den Prozeßvariablen sind jeweils Einheiten 201 bis 204 zur dynamischen Modellierung zugeordnet, die über Schalter 221 bis 224 in die Eingangsleitungen für pH-Wert, Temperatur T, Gehalt an freiem SO₂ sowie Druck P zuschaltbar sind. Zwischen den Modellierungseinheiten 201 bis 204 und dem Neuronalen Netz 200 sind nun jeweils Integrationseinheiten 210, 220, 230 und 240 zugeschaltet, die eine zeitliche Integration der Prozeßvariablen bis zum jeweils augenblicklichen Zeitpunkt bewirken. Durch eine solche Zeitintegration der Meßwerte berücksichtigen die in das Neuronale Netz 200 eingegebenen Werte jeweils die Vorgeschichte seit dem Beginn der Kochung und gewährleisten somit entsprechend der Einheit 110 aus Figur 2 ein Adaptieren der Meßwerte. Über den Ausgang 220 des Neuronalen Netzes wird eine Viskositätsfunktion η(t) ausgegeben, womit eine Anzeige des Viskositätsverlaufs auf einer Anzeigeeinheit 206 erfolgt. Wesentlich ist nun, daß die Viskositätsfunktion η(t) nicht nur vom zeitlichen Verlauf der Kochung abhängig ist, sondern auch gleichermaßen die Qualität und/oder Ausbeute als für die Praxis entscheidende Funktionsparameter des erzeugten Zellstoffes wiederspiegelt. Damit eignet sich diese Funktion in besonderer Weise für die Steuerung der Kochung. Die Kochzeitbestimmung erfolgt entsprechend den Einheiten 121 und 122 aus Figur 2.

Mit dem anhand der Figuren 1 bis 3 beschriebenen Verfahren und der zugehörigen Anordnung wird das analytische Vorwissen über den Kochprozeß in besonders vorteilhafter Weise mit einem Neuronalen Netz kombiniert. Es ergibt sich so ein Vorhersagemodell mit einem geeignet trainierten Neuronalen Netz, in das über geeignete dynamische Modelle der Variablen deren zeitliches Verhalten einfließt. Somit wird dem Neuronalen Netz, das für sich gesehen ein statisches Modell darstellt, durch die Online-Adaption eine Dynamik gegeben und insbesondere das früher in gewissen Abständen in Kochpausen notwendige Nachtrainieren überflüssig.

Erprobungen in der Praxis der Zellstoffkochung haben ergeben, daß gegenüber den bisher verwendeten meist statistischen Modellen bessere Ergebnisse erzielt werden.

## Patentansprüche

1. Verfahren zur Bestimmung des Endpunktes der Zellstoffkochung, bei welchem Zeitpunkt chemische und/oder physikalische Größen für die Kochung charakteristisch sind, wobei wenigstens ein Neuronales Netz verwendet wird, dem bei der Kochung anfallende Meßgrößen als Eingangsgrößen eingegeben werden und das als Ausgangsgröße wenigstens eine für die Kochung charakteristische physikalische oder chemische Größe ausgibt, **dadurch gekennzeichnet,** daß die Eingangsgrößen über Einheiten mit einem dynamischen Modell für die jeweilige Meßgröße in das Neuronale Netz eingegeben werden und daß als Ausgangsgröße speziell die Viskosität und/oder die Kappazahl erhalten werden, wobei das Neuronale Netz während einer laufenden Kochung angepaßt und zur Anpassung das dynamische Modell der sich ändernden Meßgrößen herangezogen wird.

2. Verfahren nach Anspruch 1, **dadurch gekennzeichnet,** daß die Meßgrößen der SO₂-Gehalt der Kochsäure, deren Farbwert und deren elektrische Leitfähigkeit bzw. pH-Wert sind.

3. Verfahren nach Anspruch 1, **dadurch gekennzeichnet,** daß neben den sich dynamisch ändernden Variablen weiterhin die Zeit (t), die Temperatur (T) und andere Prozeßbedingungen (x1, x2) als Eingangsgrößen für das Neuronale Netz verwendet werden.

4. Verfahren nach Anspruch 1, **dadurch gekennzeichnet,** daß die dynamischen Modelle während einer Kochung ("batch") und das Neuronale Netz nach einer Kochung ("batch") angepaßt werden.

5. Anordnung zum Steuern der Kochzeit bei der Zellstoffkochung in einem Reaktor, mit einem dem Prozeß angepaßten Steuermodell, das wenigstens ein Neuronales Netz enthält, wobei ein Verfahren gemäß Anspruch 1 oder einem der Ansprüche 2 bis 4 angewandt wird, **dadurch gekennzeichnet,** daß das Steuermodell eine Kombination des Neuronalen Netzes (100, 200) mit dynamischen Modellen (101 - 103, 201 - 204) der Prozeßvariablen ist.

6. Anordnung nach Anspruch 5, **dadurch gekennzeichnet,** daß die analytischen Modelle (101, 102, 201, 203) das dynamische Verhalten wenigstens der SO₂-Konzentration, der elektrischen Leitfähigkeit bzw. des pH-Wertes in der Kochsäure beschreiben.

7. Anordnung nach Anspruch 5, **dadurch gekennzeichnet,** daß weitere Modelle (103, 202, 204) das dynamische Verhalten des Farbwertes sowie der Temperatur und des Druckes beschreiben.

8. Anordnung nach Anspruch 5, **dadurch gekennzeichnet,** daß zwischen dem Neuronalen Netz (100) und den dynamischen Modellen (101 bis 103) für die Prozeßvariablen eine Einheit (110) zum Online-Lernen des Neuronalen Netzes (100) geschaltet ist.

9. Anordnung nach Anspruch 5, **dadurch gekennzeichnet,** daß zwischen dem Neuronalen Netz (200) und den dynamischen Modellen (201 bis 204) für die Prozeßvariablen Integrationseinheiten (210, 220, 230, 240) zur Integration der Prozeßvariablen auf den aktuellen Kochzeitpunkt geschaltet sind.

10. Anordnung nach Anspruch 5, **dadurch gekennzeichnet,** daß der Ausgang (219) des Neuronalen Netzes (200) eine Anzeigeeinheit (206) für die Viskositätsfunktion (η(t)) ansteuert, von der der Endpunkt der Kochung sowie Qualität und/oder die Ausbeute des Zellstoffes ableitbar sind.

## Claims

1. Process for determining the end point of the cooking of pulp, at which time chemical and/or physical variables are characteristic of the cook, at least one neural network being used, to which measured variables arising during the cook are input as input variables and which outputs at least one physical or chemical variable which is characteristic of the cook as an output variable, characterized in that the input variables are put into the neural network via units having a dynamic model for the respective measured variables, and in that the viscosity and/or the kappa number are specifically obtained as the output variable, the neural network being adapted during a running cook and the dynamic model of the changing measured variables being used to adapt the dynamic model.

2. Process according to Claim 1, characterized in that the measured variables are the SO₂ content of the cooking liquor, its colour value and its electrical conductivity or pH.

3. Process according to Claim 1, characterized in that, in addition to the dynamically changing variables, use is furthermore made of the time (t), the temperature (T) and other process conditions (x1, x2) as input variables for the neural network.

4. Process according to Claim 1, characterized in that the dynamic models are adapted during a cook ("batch"), and the neural network is adapted after a cook ("batch").

5. Arrangement for controlling the cooking time in the cooking of pulp in a reactor, with a control model adapted from the process, which contains at least one neural network, a process in accordance with Claim 1 or one of Claims 2 to 4 being used, characterized in that the control model (10) is a combination of the neural network (100, 200) with dynamic models (101-103, 201-204) of the process variables.

6. Arrangement according to Claim 5, characterized in that the analytical models (101, 102, 201, 203) describe the dynamic behaviour at least of the SO₂ concentration, of the electrical conductivity or of the pH in the cooking liquor.

7. Arrangement according to Claim 5, characterized in that further models (103, 202, 204) describe the dynamic behaviour of the colour value and of the temperature and of the pressure.

8. Arrangement according to Claim 5, characterized in that a unit (110) for the on-line learning of the neural network (100) is connected between the neural network (100) and the dynamic models (101 to 103) for the process variables.

9. Arrangement according to Claim 5, characterized in that integration units (210, 220, 230, 240) for the integration of the process variables up to the current cooking time are connected between the neural network (200) and the dynamic models (201 to 204) for the process variables.

10. Arrangement according to Claim 5, characterized in that the output (219) of the neural network (200) drives an indicator unit (206) for the viscosity function (h(t)), from which the end point of the cook and the quality and/or yield of the pulp may be derived.

## Revendications

1. Procédé de détermination de la fin de la cuisson de la pâte de cellulose, fin où des grandeurs chimiques et/ou physiques sont caractéristiques pour la cuisson, en utilisant au moins un réseau neuronal auquel on envoie comme grandeurs d'entrée des grandeurs mesurées se produisant pendant la cuisson et qui émet comme grandeur de sortie au moins une grandeur physique ou chimique caractéristique pour la cuisson, caractérisé en ce qu'il consiste à envoyer les grandeurs d'entrée, par l'intermédiaire d'unités ayant un modèle dynamique pour les grandeurs mesurées, au réseau neuronal et à obtenir comme grandeur de sortie en particulier la viscosité et/ou l'indice kappa, le réseau neuronal étant adapté pendant qu'une cuisson se déroule et il est tiré parti pour l'adaptation du modèle dynamique des grandeurs mesurées qui se modifient.

2. Procédé suivant la revendication 1, caractérisé en ce que les grandeurs mesurées sont la teneur en SO₂ de l'acide de cuisson, son indice de couleur et sa conductivité électrique ou son pH.

3. Procédé suivant la revendication 1, caractérisé en ce que l'on utilise, outre les variables qui se modifient dynamiquement, le temps (t), la température (T) et d'autres conditions (x1, x2) opératoires comme grandeurs d'entrée pour le réseau neuronal.

4. Procédé suivant la revendication 1, caractérisé en ce qu'il consiste à adapter le modèle dynamique pendant une cuisson ("batch") et le réseau neuronal après une cuisson ("batch").

5. Dispositif pour se rendre maître de la durée de cuisson de la pâte cellulosique dans un réacteur par un modèle de commande adapté au processus et qui comprend au moins un réseau neuronal, en utilisant un procédé suivant la revendication 1 ou l'une des revendications 2 à 4, caractérisé en ce que le modèle de commande est une combinaison du réseau (100, 200) neuronal avec des modèles (101 à 103, 201 à 204) dynamiques des variables du processus.

6. Dispositif suivant la revendication 5, caractérisé en ce que les modèles (101, 102, 201, 203) analytiques décrivent le comportement dynamique d'au moins la concentration de SO₂, de la conductivité électrique ou du pH de l'acide de cuisson.

7. Dispositif suivant la revendication 5, caractérisé en ce que d'autres modèles (103, 202, 204) décrivent le comportement dynamique de l'indice de couleur, ainsi que de la température et de la pression.

8. Dispositif suivant la revendication 5, caractérisé en ce qu'il est branché, entre le réseau (100) neuronal et les modèles (101 à 103) dynamiques pour les variables du processus, une unité (110) d'apprentissage en ligne du réseau (100) neuronal.

9. Dispositif suivant la revendication 5, caractérisé en ce qu'il est branché, entre le réseau (200) neuronal et les modèles (201 à 204) dynamiques, pour les variables du processus, des unités (210, 220, 230, 240) d'intégration destinées à intégrer les variables du processus sur la durée actuelle de cuisson.

10. Dispositif suivant la revendication 5, caractérisé en ce que la sortie (219) du réseau (200) neuronal commande une unité (206) d'affichage de la fonction (η(t)) de viscosité, de laquelle on peut déduire la fin de la cuisson ainsi que la qualité et/ou le rendement de la pâte.
